# EUROPÄISCHE PATENTSCHRIFT

(11) **EP 3 532 352 B1**
(45) Veröffentlichungstag und Bekanntmachung des Hinweises auf die Patenterteilung: **24.06.2020**
(21) Anmeldenummer: 17793567.3
(22) Anmeldetag: 23.10.2017
(51) Int. Cl.: B60T 8/17

(54) **VERFAHREN ZUR VERZÖGERUNG EINES FAHRZEUGGESPANNS UND KOMBINATION VON PNEUMATISCHEN BREMSANLAGEN DER FAHRZEUGE EINES FAHRZEUGGESPANNS**
METHOD FOR DECELERATING A VEHICLE TRAIN AND COMBINATION OF PNEUMATIC BRAKE SYSTEMS OF THE VEHICLES OF A VEHICLE TRAIN
PROCÉDÉ DE RALENTISSEMENT D'UN TRAIN ROUTIER ET COMBINAISON DE SYSTÈMES DE FREINAGE PNEUMATIQUES DES VÉHICULES D'UN TRAIN ROUTIER

(30) Priorität: 27.10.2016 DE 102016012925
(43) Veröffentlichungstag der Anmeldung: 04.09.2019
(73) Patentinhaber: WABCO Europe BVBA, 1170 Brüssel (BE)
(72) Erfinder: ECKERT, Horst, 31547 Rehburg-Loccum (DE)
(74) Vertreter: Rabe, Dirk-Heinrich
(86) Internationale Anmeldenummer: PCT/EP2017/001241
(87) Internationale Veröffentlichungsnummer: WO 2018/077470

(56) Entgegenhaltungen:
- EP-A1- 3 009 312
- EP-A2- 0 146 769
- WO-A1-2013/004314
- WO-A2-2010/010319
- DE-A1- 10 261 513

## Beschreibung

Die Erfindung betrifft gemäß Anspruch 1 ein Verfahren zur Verzögerung eines Fahrzeuggespanns mit einem Zugfahrzeug und mindestens einem Anhängefahrzeug mit Antiblockiersystem. Die Erfindung betrifft außerdem gemäß Anspruch 6 eine Kombination von pneumatischen Bremsanlagen der Fahrzeuge eines Fahrzeuggespanns mit einer elektronischen Zugfahrzeugbremsanlage eines Zugfahrzeugs des Fahrzeuggespanns und wenigstens einer Anhängerbremsanlage eines Anhängefahrzeugs mit Antiblockiersystem.

Bei Nutzfahrzeugen werden die Räder in der Regel über pneumatisch betätigbare Radbremsen abgebremst, wobei jedes Teilfahrzeug eines Fahrzeuggespanns eine Bremsanlage aufweist. Die Zugfahrzeugbremsanlage bestimmt dabei den Bremsdruck für die Radbremsen des Zugfahrzeugs und stellt darüber hinaus einen Anhängerbremsdruck für die Anhängerbremsanlage bereit. Der Anhängerbremsdruck wird dabei in der Regel über einen Kupplungskopf bereitgestellt, an den der Bremskreis eines Anhängefahrzeugs anschließbar ist.

Die vorliegende Erfindung setzt bei Anhängefahrzeugen mit Antiblockiersystem an. Derartige Bremssysteme überwachen die Blockierneigung der Räder. Bei jeder Bremsung kann nämlich nur eine dem Fahrbahnreibwert entsprechende Bremskraft genutzt werden. Übersteigt die eingesteuerte Bremskraft aufgrund des anliegenden Bremsdrucks die maximal übertragbare Bremskraft an einem oder mehreren Rädern, beginnen diese zu blockieren, wodurch das Fahrzeug instabil werden kann. Das Antiblockiersystem überwacht permanent über Messsignale von Drehzahlsensoren das Drehverhalten jedes Rades beziehungsweise jeder Achse. Beispielsweise kann ein jeweiliger Radschlupf durch Vergleich der aus der Raddrehzahl ermittelten Radgeschwindigkeit mit einer errechneten oder ermittelten Fahrzeugreferenzgeschwindigkeit erfolgen. Wird über den so ermittelten Radschlupf eine Blockierneigung des Rades erkannt, das heißt eine ABS-Schlupfgrenze ist erreicht oder überschritten, beeinflusst eine Bremselektronik der Bremsanlage den Bremsdruck an den betreffenden Rädern über Ansteuerung von Drucksteuerventilen. Moderne Drucksteuerventile, auch ABS-Ventile genannt, bestehen aus einem Einlassventil und einem Auslassventil, so dass der Bremsdruck bedarfsweise erhöht, gehalten oder gesenkt werden kann. In einem ersten Schritt wird nach Erkennung einer Blockierneigung der Bremsdruck gesenkt, um anschließend den Bremsdruck des betreffenden Rades entlang der Schlupfgrenze zu regeln.

Nutzfahrzeuge mit Antiblockiersystemen weisen sehr oft ein zu hohes Bremsvermögen auf, insbesondere wenn die Beladung gering ist. Insbesondere bei Fahrzeugkombinationen mit unterschiedlich schwer beladenen Teilfahrzeugen ist die Wahrscheinlichkeit hoch, dass es zu einem Überbremsen einzelner Achsen kommt. Eine Berücksichtigung des Beladungszustands findet bei einer automatisch-lastabhängigen Bremse (ALB) statt, worunter Bremssysteme eines Nutzfahrzeugs verstanden werden, bei denen der Bremsdruck zur Erzielung einer bestimmten Bremswirkung eines Rades oder einer Achse vom Beladungszustand abhängig gemacht wird. Bei schwerer Beladung wird der Bremsdruck erhöht und bei wenig Beladung verringert, um die Bremswirkung des Rades beziehungsweise der Achse an die vom Fahrer geforderte Wunschverzögerung anzupassen, auch soll die Gefahr eines zu frühzeitigen Blockierens eines oder mehrerer Räder minimiert werden. Es ist dabei bekannt, den Beladungszustand über eine Verbindung mit der Federung des Nutzfahrzeugs zu erfassen oder in anderen bekannten Systemen durch Auswertung des Schlupfs der Räder.

Eine Vielzahl von Nutzfahrzeugen, insbesondere Anhängefahrzeugen, sind jedoch nicht mit ALB ausgerüstet, insbesondere Nutzfahrzeuge außerhalb Europas. Bei Bremsungen des Fahrers wird sehr oft eine in Relation zum Größenwert der Betätigung des Bremspedals durch den Fahrer viel zu starke Verzögerung durch die Bremsanlagen bewirkt. Ein ähnliches Verhalten kann aber auch bei sogenannten abgelasteten Fahrzeugen auftreten, bei denen die Bremsanlage nicht an eine geringere Fahrzeugmasse angepasst wurde. Dieses trifft beispielsweise auf ein Fahrzeug zu, das innerhalb einer Fahrzeugbaureihe mit gleichen Bremsanlagen verhältnismäßig leicht ist. In Fahrzeugen ohne automatisch-lastabhängige Bremse (ALB) über- oder unterbremsen einzelne Achsen, je nach Achslastverteilung innerhalb des Fahrzeugs. Dieses Phänomen trifft umso stärker bei Fahrzeuggespannen mit mehreren Nutzfahrzeugen in Erscheinung.

Der vorliegenden Erfindung liegt die Aufgabe zugrunde, das Bremsverhalten eines Fahrzeuggespanns von Zugfahrzeug und wenigstens einem Anhängefahrzeug mit Antiblockiersystem zu verbessern.

Diese Aufgabe wird erfindungsgemäß durch ein Verfahren mit den Merkmalen des Anspruchs 1 gelöst. Die Aufgabe wird außerdem durch eine Kombination von pneumatischen Bremsanlagen der Fahrzeuge eines Fahrzeuggespanns mit den Merkmalen des Anspruchs 6 gelöst.

In der nachfolgenden Beschreibung wird unter einem Zugfahrzeug ein im Fahrzeuggespann vorausfahrendes Teilfahrzeug verstanden, welches ein Anhängefahrzeug unmittelbar oder mittelbar über ein weiteres Anhängefahrzeug zieht. Erfindungsgemäß umfasst die Zugfahrzeugbremsanlage eine elektronische Bremssteuereinheit, welche einen aktuellen Fahrzeugverzögerungs-Istwert erfasst und laufend mit einer ermittelten oder vorgegebenen Maximalverzögerung vergleicht. Im Fall, dass der Fahrzeugverzögerungs-Istwert die Maximalverzögerung erreicht oder überschreitet, limitiert die Bremssteuereinheit den Bremsdruck im Zugfahrzeug. Dies erfolgt insbesondere durch Schließen der Einlassventile der Drucksteuerventile für die Dauer der Limitierung des Bremsdrucks, so dass ein weiterer Anstieg des Bremsdrucks ausgeschlossen ist. Zugleich stellt die Bremssteuereinheit der Zugfahrzeugbremsanlage im Fall der Limitierung des Bremsdrucks ein Informationssignal für die jeweilige Bremselektronik jedes Anhängefahrzeugs bereit, welches eine Limitierungsstatusinformation repräsentiert.

Die jeweilige Bremselektronik einer Anhängerbremsanlage empfängt das Informationssignal des Zugfahrzeugs und bestimmt bei Erkennung einer Limitierung des Bremsdrucks im Zugfahrzeug anhand der Messsignale von Drehzahlsensoren der Räder des betreffenden Anhängefahrzeugs für jede Anhängeachse einen dem Schlupf repräsentierenden dynamischen Schlupfgrößenwert. Als Schlupfgrößenwert wird dabei der jeweilige Schlupf der Anhängeachse oder besonders vorteilhaft die jeweilige Geschwindigkeit der Anhängerachse ermittelt. Unterschiedliche Geschwindigkeiten der Anhängerachsen gehen dabei mit jeweils unterschiedlichem Schlupf einher, wobei eine höhere Achsgeschwindigkeit auf einen geringeren Schlupf an der betreffenden Achse schließen lässt.

Die Bremselektronik des Anhängefahrzeugs vergleicht die Schlupfgrößenwerte aller Anhängerachsen miteinander und schließt wenigstens an denjenigen Anhängerachsen mit den höheren Schlüpfen gegenüber einer als Regelachse ausgewählten Anhängerachse mit dem aktuellen geringsten Schlupf die Einlassventile der jeweiligen Drucksteuerventile. Anders ausgedrückt wird diejenige Anhängerachse mit der größten Geschwindigkeit, welche dementsprechend den aktuell geringsten Schlupf aller verglichenen Anhängerachsen aufweist, als Regelachse ausgewählt und jedenfalls an sämtlichen übrigen Anhängerachsen die jeweiligen Einlassventile geschlossen, so dass nur an den Radbremsen der Regelachse eine Erhöhung des Anhängerbremsdrucks Wirkung zeigen könnte. Da die Schlupfgrößenwerte der Anhängerachsen laufend miteinander verglichen werden und die Auswahl der Regelachse, an welcher das Einlassventil geöffnet bleiben kann, gegebenenfalls geändert wird bei Vorliegen entsprechender Bremsverhältnisse, werden Schlupfunterschiede der Anhängerachsen ähnlich einer Differenzschlupfregelung ausgeglichen und einem Überbremsen oder Unterbremsen einzelner Anhängerachsen entgegengewirkt.

In einer vorteilhaften Ausführungsform der Erfindung wird die Maximalverzögerung in Abhängigkeit der vom Fahrer vorgegebenen Wunschverzögerung ermittelt. Die Maximalverzögerung wird dabei zum einen derartig festgelegt, dass im unteren Bereich (Anfangsbereich) der Wunschverzögerung der Verlauf der Maximalverzögerung flacher als der Verlauf der Wunschverzögerung ist und im weiteren Verlauf der Wunschverzögerung zunehmend mit Zunahme der Wunschverzögerung steiler wird. Zum anderen wird bei der Bestimmung der Maximalverzögerung eine quasi unnötige beziehungsweise unerwünschte Bremswirkung durch die Fahrzeugachsen des Zugfahrzeugs vermieden, indem der Bremsdruck dieser Zugfahrzeugachsen auf einen Wert begrenzt wird, der zur Abbremsung des Zugfahrzeugs gemäß der vom Fahrer vorgegebenen Wunschverzögerung maximal benötigt wird. Um auch bei unterschiedlichen Beladungszuständen eine für den Fahrer angenehme und sichere Bremsung zu gewährleisten, ist die Maximalverzögerung in Abhängigkeit der Wunschverzögerung beladungsabhängig vorgegeben. Demnach verläuft die Maximalverzögerungs-Kennlinie bei einer hohen Beladung vergleichsweise flacher und bei einer geringen Beladung steiler, das heißt im Mittel stärker ansteigend, so dass der Bremsdruck an den Radbremsen der zu regelnden Zugfahrzeugachsen bei hoher Belastung bereits bei einem niedrigeren Fahrzeugverzögerungs-Ist-Wert gehalten wird, als bei einer geringeren Beladung.

Zur Bestimmung der Maximalverzögerung ist der Bremssteuereinheit des Zugfahrzeugs vorteilhaft ein Kennfeldspeicher zugeordnet, in welchem vorzugebene Maximalverzögerungen in Abhängigkeit der Wunschverzögerung abgespeichert sind. Die Bremssteuereinheit ist entsprechend dazu ausgebildet, eine Maximalverzögerung in Abhängigkeit der vom Fahrer aktuell vorgegebenen Wunschverzögerung zu bestimmen. Durch die Berücksichtigung von Maximalverzögerungs-Kennlinien bei der Bestimmung der Maximalverzögerung wird dem Fahrer durch die ausgesteuerte Bremswirkung der Beladungszustand des Fahrzeugs vermittelt, denn bei einer geringeren Belastung wird bei gleicher Wunschverzögerung stärker verzögert als bei einer hohen Beladung. Nicht zuletzt aufgrund dieser Wirkung können die Maximalverzögerung-Kennlinien auch als "Feelingkurven" bezeichnet werden. Die Feelingkurven-Verzögerung ist stets abhängig vom Fahrerbremswunsch, das heißt von der Größe der vom Fahrer (durch Betätigung eines Bremspedals) vorgegebenen Wunschverzögerung. Die Feelingkurven beziehungsweise Maximalverzögerungskennlinien sind in weiteren vorteilhaften Ausführungsformen abhängig von einer ermittelten Fahrzeugmasse oder Achslasten. Es können auch von der Fahr- beziehungsweise Bremssituation abhängig unterschiedliche Feelingkurven zur Anwendung gelangen.

Das Informationssignal der elektronischen Bremssteuereinheit wird insbesondere über eine Datenübertragung zwischen dem Zugfahrzeug und dem Anhängefahrzeug übertragen, beispielsweise über einen CAN-Bus.

In einer besonders vorteilhaften Ausführungsform der Erfindung wird der dynamische Schlupfgrößenwert der Regelachse des Anhängefahrzeugs verglichen mit entsprechenden Schlupfgrößenwerten der Achsen des Zugfahrzeugs, so dass ein Unterbremsen oder Überbremsen der Regelachse des Anhängefahrzeugs zuverlässig feststellbar ist. Informationen über die dynamischen Schlupfgrößenwerte der Achsen des Anhängefahrzeugs ermittelt die Bremssteuereinheit des Zugfahrzeugs aus den Messsignalen von Drehzahlsensoren an den Rädern des Zugfahrzeugs. Die entsprechenden Informationen stehen in der Regel bereits durch die in der Bremssteuereinheit des Zugfahrzeugs implementierten Bremsmanagementfunktionen und Stabilitätsfunktionen zur Verfügung, beispielsweise einem Antiblockiersystem der Zugfahrzeugbremsanlage.

Sollte mit dem Ist-Wert der Fahrzeugverzögerung des mehrere Teilfahrzeuge umfassenden Fahrzeuggespanns eine Überschreitung der vorgegebenen Maximalverzögerung festgestellt werden, so kann durch den Vergleich der dynamischen Schlupfgrößenwerte von Achsen verschiedener Fahrzeuge ein Rückschluss auf den Einfluss des Anhängerfahrzeugs auf das Überbremsen der gesamten Fahrzeugkombination gezogen werden. In dem Fall, dass die Regelachse des Anhängefahrzeugs den im Vergleich mit dem Zugfahrzeugachsen größten Schlupf aufweist, ist erkennbar, dass das Anhängefahrzeug maßgeblich dafür verantwortlich ist, dass das Fahrzeuggespann überbremst beziehungsweise die vorgegebene Maximalverzögerung überschreitet. In diesem Fall werden auch an der Regelachse die Einlassventile der Drucksteuerventile geschlossen, so dass an sämtlichen Anhängerachsen ein weiterer Anstieg des Bremsdrucks ausgeschlossen ist. Durch die laufende Ermittlung und Vergleich der Schlupfgrößenwerte ist sichergestellt, dass bei einer Veränderung der Bremsverteilung auf die Achsen eine Neubewertung der Bremssituation erfolgt, beispielsweise bei einer Veränderung der vom Fahrer angeforderten Wunschverzögerung entsprechend seiner Bremspedalbetätigung.

Ein minimaler Datentransfer zwischen Zugfahrzeug und Anhängefahrzeug ist gegeben, wenn die Bremselektronik des Anhängefahrzeugs den Schlupfgrößenwert der von ihr bestimmten Regelachse des Anhängefahrzeugs der Bremssteuereinheit des Zugfahrzeugs mitteilt. Der Vergleich der dynamischen Schlupfgrößenwerte der Regelachse des Anhängefahrzeugs mit den entsprechenden Schlupfgrößenwerten der Achsen des Zugfahrzeugs wird dabei von der Bremssteuereinheit durchgeführt, welche ein Informationssignal mit einer dem Vergleich der Schlupfgrößenwerte entsprechenden Überbremsinformationen bereitstellt. Die Überbremsinformation indiziert dabei den Anteil der Achsen des Anhängefahrzeugs am Überbremsen des gesamten Fahrzeuggespanns.

Die Überbremsinformation hat den Inhalt "1", also einen ersten Überbremsstatus, wenn der Schlupf der Regelachse des Anhängefahrzeugs, welche der Bremssteuereinheit des Zugfahrzeugs mitgeteilt wurde, kleiner ist als der Schlupf zumindest einer der Zugfahrzeugachsen. Bei der vorteilhaften Auswertung und Vergleich der Achsgeschwindigkeiten entspricht dies einer größeren Achsgeschwindigkeit der Regelachse gegenüber wenigstens einer der Zugfahrzeugachsen. Ist die Achsgeschwindigkeit der Regelachse kleiner als die Geschwindigkeiten aller betrachteten Zugfahrzeugachsen, das heißt ihr Schlupf ist größer als alle betrachteten Zugfahrzeugachsen, so stellt die Bremssteuereinheit des Zugfahrzeugs der Bremselektronik des Anhängefahrzeugs die Überbremsinformation mit dem Überbremsstatus "2" bereit. Empfängt die Bremselektronik der Anhängerbremsanlage ein Informationssignal mit der Überbremsinformation gemäß dem Überbremsstatus "1", so werden an sämtlichen Anhängerachsen mit Ausnahme der Anhängerachse mit dem aktuell geringsten Schlupf (Regelachse) die Einlassventile der jeweiligen Drucksteuerventile geschlossen. Empfängt die Bremselektronik der Anhängerbremsanlage eine Überbremsinformation mit dem Überbremsstatus "2", so werden bis zur Veränderung dieser Situation an allen Radbremsen des Anhängefahrzeugs die jeweiligen Einlassventile geschlossen.

Ein Informationssignal mit einer Überbremsinformation, entweder mit dem Überbremsstatus "1" oder dem Überbremsstatus "2", repräsentiert gleichzeitig die Vermittlung der Limitierungsstatusinformation. In Bremssituationen, in denen der aktuelle Fahrzeugverzögerungs-Ist-Wert die Maximalverzögerung nicht erreicht oder überschreitet, wird kein Informationssignal transferiert oder ein Informationssignal mit einer Bremsstatusinformation mit dem Überbremsstatus "0". Es muss daher nur eine sehr geringe Datenmenge von der Bremssteuereinheit des Zugsfahrzeugs zur Bremselektronik des Anhängefahrzeugs übertragen werden, um der Bremselektronik des Anhängefahrzeugs die für die Durchführung des erfindungsgemäßen Verfahrens benötigten Informationen bereitzustellen.

Ein Ausführungsbeispiel der Erfindung ist nachstehend anhand der Zeichnung näher erläutert. Es zeigen:
- Fig. 1: ein pneumatisches und elektrisches Schema eines Ausführungsbeispiels einer Kombination von Bremsanlagen eines Fahrzeuggespanns,
- Fig. 2: ein Flussschaubild eines Ausführungsbeispiels eines Verfahrens zum Verzögern des Fahrzeuggespanns gemäß Fig. 1.

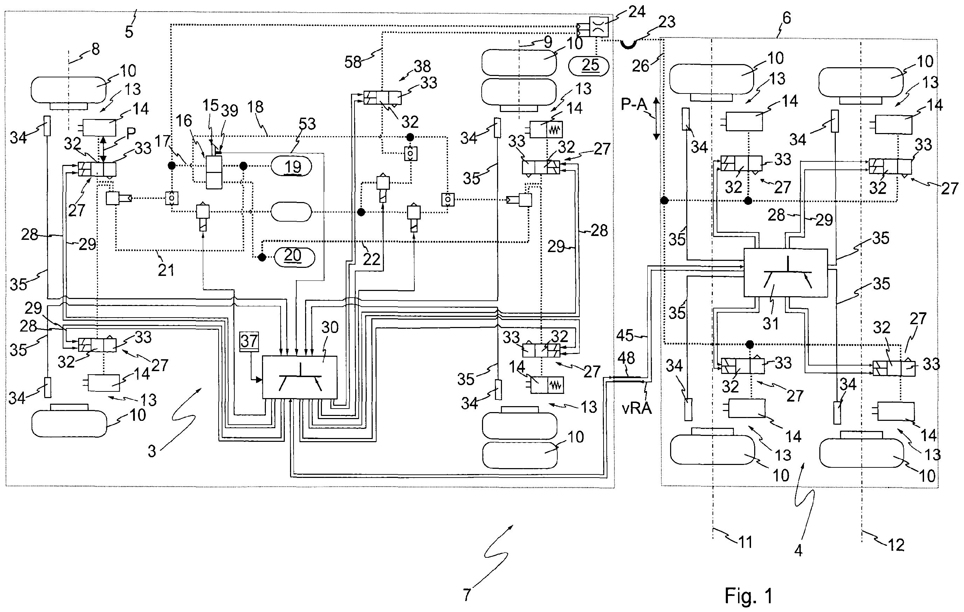

Fig. 1 zeigt einen elektrisch-pneumatischen Plan einer Kombination von pneumatischen Bremsanlagen 3, 4 der Nutzfahrzeuge 5, 6 eines Fahrzeuggespanns 7, nämlich eines Zugfahrzeugs 5 mit im Ausführungsbeispiel einem Anhängefahrzeug 6. Elektrische Leitungen sind mit Volllinien und pneumatische Leitungen mit punktierten Linien dargestellt. Das Zugfahrzeug 5 umfasst im gezeigten Ausführungsbeispiel zwei Achsen, nämlich eine Vorderachse 8 und eine Hinterachse 9, an denen jeweils beidseitig Räder 10 angeordnet sind. Das Anhängefahrzeug 6 weist ebenfalls zwei Anhängerachsen 11, 12 mit jeweils Rädern 10 auf. Zum Abbremsen der Räder 10 ist jedem Rad 10 eine Radbremse 13 zugeordnet, welche pneumatisch über Bremszylinder 14 betätigbar. Die Radbremsen 13 üben entsprechend dem jeweils im Bremszylinder 14 anliegenden pneumatischen Bremsdruck P eine Bremskraft auf das drehende Rad 10 aus.

In der Fahrerkabine des Zugfahrzeugs 5 ist ein Bremspedal 15 angeordnet, welches an ein Betriebsbremsventil 16 gekoppelt ist. Der Fahrer des Zugfahrzeugs 5 kann durch Betätigen des Bremspedals 15 pneumatischen Druck zu den Bremszylindern 14 durchschalten und somit die Radbremsen 13 betätigen. Hierzu beherrscht das Betriebsbremsventil 16 pneumatische Bremsleitungen 17, 18 zwischen Druckmittelvorräten 19, 20 und den Bremszylindern 14.

Im gezeigten Ausführungsbeispiel sind die Radbremsen 13 der Vorderachse 8 einem gemeinsamen ersten Bremskreis 21 zugeordnet, während die Radbremsen 13 der Hinterachse 9 über einen zweiten Bremskreis 22 betätigbar sind. Der erste Druckmittelvorrat 19 ist dabei dem ersten Bremskreis 21 zugeordnet und über die Bremsleitung 17 an die Bremszylinder 14 der Vorderachse 8 angeschlossen. Der zweite Bremskreis 22 der Hinterachse 9 wird über einen zweiten Druckmittelvorrat 20 mit Druckmittel versorgt. Der zweite Bremskreis 22 ist analog dem ersten Bremskreis 21 aufgebaut, das heißt, dass die Bremsleitung 18 zwischen dem zweiten Druckmittelvorrat 20 zu den Radbremsen 13 der Hinterachse 9 über das Betriebsbremsventil 16 freigebbar ist und daher der Bremsdruck P in Abhängigkeit von der Stellung des Bremspedals 15 einstellbar ist.

Die Zugfahrzeugbremsanlage 3 umfasst einen Kupplungskopf 23, an den die Anhängerbremsanlage 4 des Anhängefahrzeugs 6 ankuppelbar ist. Über den Kupplungskopf 23 stellt die Zugfahrzeugbremsanlage 3 einen pneumatischen Anhängerbremsdruck P-A für die Anhängerbremsanlage 4 bereit. Dabei ist dem Kupplungskopf 23 ein Anhänger-Kontrollventil 24 zugeordnet, welches die Verbindung zwischen einem dritten Druckvorrat 25 und dem pneumatischen Kupplungskopf 23 beherrscht. Die Anhängerbremsanlage 4 weist einen Anhängerbremskreis 26 auf, in dem der vom Zugfahrzeug 5 bereitgestellte Anhängerbremsdruck P-A herrscht und zu allen Radbremsen 13 durchschaltbar ist.

Sowohl in der Zugfahrzeugbremsanlage 3 als auch in der Anhängerbremsanlage 4 ist jedem Bremszylinder 14 ein Drucksteuerventil 27 vorgeschaltet, welche elektrisch ansteuerbar sind. Zum Empfang von Steuersignalen 28, 29 sind die Drucksteuerventile 27 der Zugfahrzeugbremsanlage 3 mit einer Bremssteuereinheit 30 verbunden. Die Drucksteuerventile 27 der Anhängerbremsanlage 4 sind mit einer Bremselektronik 31 verbunden. Die Drucksteuerventile 27 sind jeweils eine Kombination von wenigstens zwei Magnetventilen, nämlich einen Einlassventil 32 und einem Auslassventil 33. Das Einlassventil 32 dient dabei prinzipiell zur Druckerhöhung beziehungsweise zum Halten des Drucks im jeweiligen Bremszylinder 14, während das Auslassventil 33 zur Reduzierung des Bremsdrucks geöffnet wird und den jeweils angeschlossenen Bremszylinder 14 entlüftet. Das Einlassventil 32 und das Auslassventil 33 sind vorzugsweise 2/2-Wegeventile.

Die Bremssteuereinheit 30 und die Bremselektronik 31 sind dazu ausgebildet und vorgesehen, bedarfsweise den Bremsdruck im jeweiligen Fahrzeug zu beeinflussen. Hierzu wird in jedem Fahrzeug das Drehverhalten der Räder 10 überwacht. Jedem Rad 10 des Zugfahrzeugs 5 und jedem Rad 10 des Anhängefahrzeugs 6 ist dabei jeweils ein Drehzahlsensor 34 zugeordnet, welcher Messsignale 35 mit Aussage über das Drehverhalten des jeweiligen Rades 10 erzeugt. Die Drehzahlsensoren 34 der Zugfahrzeugbremsanlage 3 sind mit der Bremssteuereinheit 30 verbunden und die Drehzahlsensoren 34 der Anhängerbremsanlage 4 mit der Bremselektronik 31. Die Bremssteuereinheit 30 wertet die Messsignale 35 der Drehzahlsensoren 34 der Zugfahrzeugbremsanlage 3 aus.

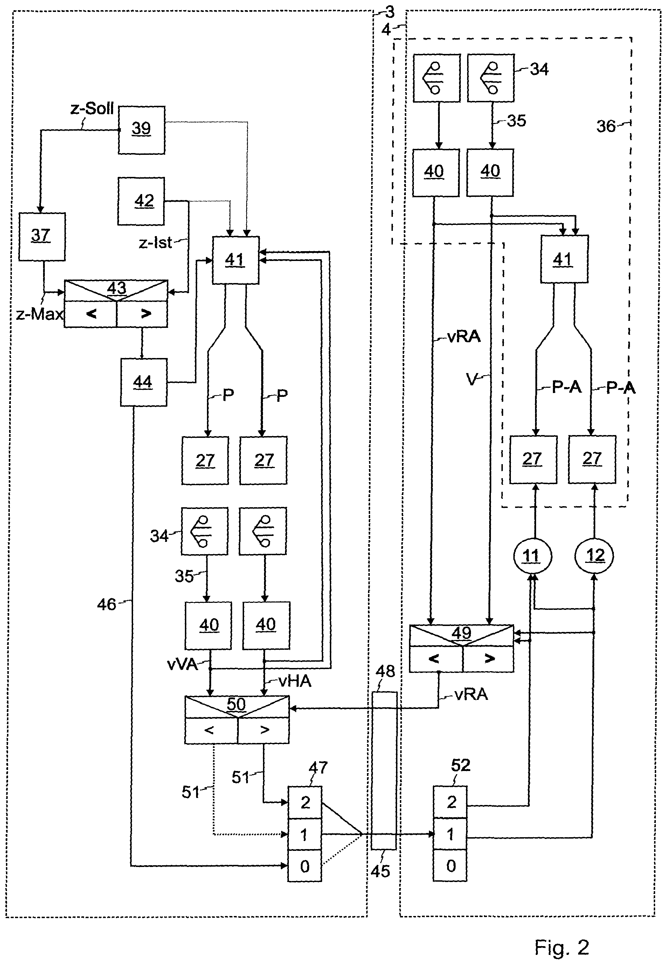

Die Bremselektronik 31, die Drehzahlsensoren 34 und die Drucksteuerventile 27 der Anhängerbremsanlage 4 sind die wesentlichen Elemente eines Antiblockiersystems (Bezugszeichen 36 in Fig. 2) des Anhängefahrzeugs 6. Die Bremselektronik 31 überwacht über die Drehzahlsensoren 34 beziehungsweise die Auswertung deren Messsignale 35 die Blockierneigung der einzelnen Räder. Bei Feststellen einer Blockierneigung eines einzelnen Rades wirkt die Bremselektronik 31 durch Ansteuerung eines oder mehrerer Drucksteuerventile 27 und Regelung der Bremsdrücke entlang der Schlupfgrenze einem Blockieren der Räder entgegen.

Die Auswertung der Messsignale 35 der Drehzahlsensoren 34 erfolgt für eine oder mehrere Bremsmanagementfunktionen oder Stabilitätsfunktionen wie beispielsweise einer Antiblockierfunktion. Die Bremssteuereinheit 30 empfängt außerdem eine Fahrerwunschinformation 53, aus welcher die Bremssteuereinheit 30 die vom Fahrer angeforderte Wunschverzögerung (Bezugszeichen "z-Soll" in Fig. 2) herleitet. Hierzu ist im gezeigten Ausführungsbeispiel ein Bremssignalgeber 39 vorgesehen, welcher beispielsweise für eine Wegmessung oder Kraftmessung an ein Bauteil des Betriebsbremsventils 16 oder an das Bremspedal 15 im Fahrerhaus gekoppelt ist. In einem weiteren Ausführungsbeispiel wird zur Bereitstellung der Fahrerwunschinformation 53, welche die Wunschverzögerung des Fahrers repräsentiert, der vom Fahrer über das Bremspedal 15 und dem Betriebsbremsventil 16 ausgesteuerte Bremsdruck in einer der Bremsleitungen 17, 18 sensiert, anders ausgedrückt gibt der Fahrer durch die Betätigung des Bremspedals 15 seinen Bremswunsch vor, welcher der Bremssteuereinheit 30 über ein Signal mit der Fahrerwunschinformation 53 mitgeteilt wird, welches qualitativ der Wunschverzögerung z-Soll entspricht.

Der Bremssteuereinheit 30 ist außerdem ein Kennfeldspeicher 37 zugeordnet, in welchem Maximalverzögerungen z-Max in Abhängigkeit der Wunschverzögerung z-Soll abgespeichert sind. Die Bremssteuereinheit 30 ist dazu ausgebildet, eine Maximalverzögerung z-Max in Abhängigkeit der vom Fahrer aktuell vorgegebenen Wunschverzögerung z-Soll zu bestimmen.

Schließlich umfasst die Zugfahrzeugbremsanlage 3 ein zusätzliches Anhänger-Drucksteuerventil 38, über welches die Bremssteuereinheit 30 bedarfsweise den Anhängerbremsdruck P-A beeinflussen kann, welcher über den pneumatischen Kupplungskopf 23 für das Anhängefahrzeug 4 bereitgestellt wird.

Ein Ausführungsbeispiel der Betriebsweise der Kombination von Zugfahrzeugbremsanlage 3 und Anhängerbremsanlage 4 ist nachstehend anhand von Fig. 2 näher erläutert. Sowohl die Bremssteuereinheit 30 der Zugfahrzeugbremsanlage 3 als auch die Bremselektronik 31 der Anhängerbremsanlage 4 sind zur Auswertung 40 der Messsignale 35 der Drehzahlsensoren 34 konfiguriert, welche einer Druckbestimmung 41 zugrunde gelegt werden. Entsprechend der Druckbestimmung beziehungsweise Bestimmung des Bremsdrucks werden entsprechende Steuersignale 28, 29 für die betroffenen Drucksteuerventile 27 erzeugt, um den Bremsdruck P, P-A im jeweiligen Nutzfahrzeug bedarfsweise einzustellen. Bei der Auswertung 40 wird jeweils ein Schlupfgrößenwert v, v-RA, v-VA, v-HA bestimmt, welcher den Schlupf der jeweiligen Fahrzeugachse repräsentiert. Die Schlupfgrößenwerte sind dabei jeweils in der gleichen Dimension ermittelt, damit die Schlupfgrößenwerte unterschiedlicher Achsen vergleichbar sind. Im gezeigten Ausführungsbeispiel werden als Schlupfgrößenwerte die jeweiligen Achsgeschwindigkeiten ermittelt.

Die Bremssteuereinheit 30 der Zugfahrzeugbremsanlage liest den Kennfeldspeicher 37 in Abhängigkeit der aktuell vom Fahrer vorgegebenen Wunschverzögerung z-Soll aus und ermittelt so anhand der im Kennfeldspeicher 37 abgespeicherten Feelingkurven eine Maximalverzögerung z-Max. Ferner ist die Bremssteuereinheit 30 zur Erfassung 42 eines aktuellen Fahrzeugverzögerungs-Istwerts z-Ist ausgebildet. Den Fahrzeugverzögerungs-Istwert z-Ist und die ermittelte Maximalverzögerung z-Max unterzieht die Bremssteuereinheit 30 einem Vergleich 43. Im Fall, dass der Fahrzeugverzögerungs-Istwert z-Ist die Maximalverzögerung z-Max erreicht oder überschreitet, erfolgt eine Limitierung 44 des Bremsdrucks. Die Entscheidung über eine Limitierung 44 des Bremsdrucks wird im Schritt der Druckbestimmung 41 unmittelbar umgesetzt, wobei die Bremssteuereinheit 30 beispielsweise einzelne oder sämtliche Einlassventile 32 der Drucksteuerventile 27 der Zugfahrzeugbremsanlage 3 durch Erzeugung entsprechender Steuersignale 28, 29 schließt.

Im Fall der Limitierung 44 des Bremsdrucks stellt die Bremssteuereinheit 30 der Zugfahrzeugbremsanlage 3 ein Informationssignal 45 für die jeweilige Bremselektronik 31 einer Anhängerbremsanlage 4 jedes Anhängefahrzeugs 6 bereit, welches eine Limitierungsstatusinformation 46 repräsentiert. Die Bereitstellung 47 des Informationssignals 45 erfolgt über die Kommunikationsverbindung 48 der Teilfahrzeuge des Fahrzeuggespanns, beispielsweise eine CAN-Verbindung. Die Bremselektronik 31 der Anhängerbremsanlage 4 ist zum Empfang 52 des Informationssignals 45 ausgebildet, so dass der Bremselektronik 31 das Vorliegen einer Überbremsungssituation auf der Grundlage der über Feelingkurven ermittelten Maximalverzögerung z-Max vorliegt.

In einem solchen Fall, dass der aktuelle Fahrzeugverzögerungs-Istwert z-Ist die ermittelte Maximalverzögerung z-Max erreicht beziehungsweise überschreitet, erfolgt in der Bremselektronik 31 ein Vergleich 49 der von der Bremselektronik 31 ermittelten Schlupfgrößenwerte v, vRA der Anhängerachsen 11, 12. Auf der Grundlage des Vergleichs 49 der Schlupfgrößenwerte aller Anhängerachsen 11, 12 schließt die Bremselektronik an derjenigen Anhängerachse 12 mit dem höheren Schlupf gegenüber der Regelachse 11 mit dem aktuell geringsten Schlupf die Einlassventile 32 der jeweiligen Drucksteuerventile 27. In Ausführungsbeispielen mit mehr als zwei Anhängerachsen werden anhand des Vergleichs 49 der Schlupfgrößenwerte v, vRA aller Anhängerachsen 11, 12 an sämtlichen Anhängerachsen 12 mit den höheren Schlüpfen gegenüber der Regelachse 11 mit dem geringsten Schlupf die Einlassventile geschlossen.

Der Schlupfgrößenwert vRA der als Regelachse 11 mit dem aktuell geringsten Schlupf gegenüber sämtlichen anderen Anhängerachsen 12 ermittelten Anhängerachse wird über die Kommunikationsverbindung 48 (CAN) der Bremssteuereinheit 30 der Zugfahrzeugbremsanlage 3 mitgeteilt. Die Bremssteuereinheit 30 der Zugfahrzeugbremsanlage 3 ermittelt für die Vorderachse 8 einen Schlupfgrößenwert vVA und für die Hinterachse 9 des Zugfahrzeugs 5 einen Schlupfgrößenwert vHA, welche mit dem von der Bremselektronik 31 des Anhängefahrzeugs 6 mitgeteilten Schlupfgrößenwert vRA der Regelachse 11 verglichen werden. In dem Fall, dass für die Regelachse 11 des Anhängefahrzeugs 6 im Fahrzeugvergleich 50 der größte Schlupf ermittelt wird, wird dies der Bremselektronik 31 mitgeteilt über ein Informationssignal 45 und auch an der Regelachse 11 des Anhängefahrzeugs 6 die Einlassventile 32 der Drucksteuerventile 27 geschlossen.

Bei der Berücksichtigung anhand beispielsweise der Achsgeschwindigkeiten als Schlupfgrößenwerte ergibt sich die Situation, dass sämtliche Einlassventile im Anhängefahrzeug geschlossen werden, wenn die Achsgeschwindigkeit der Regelachse 11 (Vorderachse) des Anhängefahrzeugs 6 kleiner ist als die kleinere Achsgeschwindigkeit der Geschwindigkeiten von Vorderachse 8 und Hinterachse 9 des Zugfahrzeugs 5.

Abhängig von dem Fahrzeugvergleich 50 der Schlupfgrößenwerte vVA, vHA, vRA wird der Bremselektronik 31 der Anhängerbremsanlage 4 ein Informationssignal 45 mit einer dem Fahrzeugvergleich 50 entsprechenden Überbremsinformation 51 bereitgestellt. In dem Fall, dass für die Regelachse 11 mit ihren offenstehenden Einlassventilen ausweislich des entsprechenden Schlupfgrößenwerts vRA ein kleinerer Schlupf, respektive größere Geschwindigkeit, ermittelt wurde als für zumindest eine der Achsen 8, 9 des Zugfahrzeugs 5, bleiben die Einlassventile an der Regelachse 11 offen und es werden lediglich an den anderen Anhängerachsen die Einlassventile der jeweiligen Drucksteuerventile geschlossen. Diese Situation wird bei der Bereitstellung 47 des Informationssignals 45 durch einen ersten Bremsstatus 1 repräsentiert.

Der zweite Bremsstatus 2 wird der Bremselektronik 31 der Anhängerbremsanlage über ein entsprechendes Informationssignal 45 mitgeteilt, wenn sich im Fahrzeugvergleich 50 aller Schlupfgrößenwerte die Regelachse als diejenige der verglichenen Achsen erweist, welche den aktuell größten Schlupf aufweist, d. h. innerhalb aller betrachteten Achsen aktuell am stärksten überbremst ist. Diese Situation tritt bei dem Vergleich der Achsgeschwindigkeiten als Schlupfgrößenwerte ein, wenn die Regelachse 11 die kleinste Achsgeschwindigkeit vVA, vHA, vRA aller verglichenen Achsen 8, 9, 11 aufweisen sollte. In diesem Fall veranlasst die Bremselektronik 31 nach Empfang eines Informationssignals 45 mit dem zweiten Bremsstatus 2 ein Schließen sämtlicher Einlassventile, also auch der Einlassventile der bisher als Regelachse 11 betrachteten Anhängerachse.

Solange Fahrzeugverzögerungs-Istwerte z-Ist unterhalb der als Schwelle für den Eingriff der Limitierung 44 vorgegebenen Maximalverzögerung z-Max bleiben, wird der Bremselektronik 31 der Anhängerbremsanlage 4 des Anhängefahrzeugs 6 durch die Bremssteuereinheit 30 der Zugfahrzeugbremsanlage 3 des Zugfahrzeugs 5 ein Normalbremsstatus 0 vermittelt. Dies kann aktiv durch Übermittlung eines entsprechenden Informationssignals 45 mit diesem Bremsstatus erfolgen oder lediglich durch ein Ausbleiben eines Informationssignals 45. In diesem Fall vermittelt ein Informationssignal 45 mit dem ersten Bremsstatus 1 oder dem zweiten Bremsstatus 2 gleichzeitig die Limitierungsstatusinformation 46, dass also eine Limitierung 44 des Bremsdrucks P in der Zugfahrzeugbremsanlage 3 erfolgt ist.

### Bezugszeichenliste (Bestandteil der Beschreibung)

- 0.: Normalbremsstatus
- 1.: Bremsstatus
- 2.: Bremsstatus
- 3.: Zugfahrzeugbremsanlage
- 4.: Anhängerbremsanlage
- 5.: Zugfahrzeug
- 6.: Anhängefahrzeug
- 7.: Fahrzeuggespann
- 8.: Vorderachse
- 9.: Hinterachse
- 10.: Rad
- 11.: Regelachse
- 12.: Anhängerachse
- 13.: Radbremse
- 14.: Bremszylinder
- 15.: Bremspedal
- 16.: Betriebsbremsventil
- 17.: Bremsleitung
- 18.: Bremsleitung
- 19.: Druckmittelvorrat
- 20.: Druckmittelvorrat
- 21.: Erster Bremskreis
- 22.: Zweiter Bremskreis
- 23.: Kupplungskopf
- 24.: Anhänger-Kontrollventil
- 25.: Druckmittelvorrat
- 26.: Anhängerbremskreis
- 27.: Drucksteuerventil
- 28.: Steuersignal
- 29.: Steuersignal
- 30.: Bremssteuereinheit
- 31.: Bremselektronik
- 32.: Einlassventil
- 33.: Auslassventil
- 34.: Drehzahlsensor
- 35.: Messsignal
- 36.: Antiblockiersystem
- 37.: Kennfeldspeicher
- 38.: Anhänger-Drucksteuerventil
- 39.: Bremssignalgeber
- 40.: Auswertung
- 41.: Druckbestimmung
- 42.: Erfassung
- 43.: Vergleich
- 44.: Limitierung
- 45.: Informationssignal
- 46.: Limitierungsstatusinformation
- 47.: Bereitstellung
- 48.: Kommunikationsverbindung (CAN)
- 49.: Vergleich
- 50.: Fahrzeugvergleich
- 51.: Überbremsinformation
- 52.: Empfang
- 53.: Fahrerwunschinformation

- P: Bremsdruck
- P-A: Anhängerbremsdruck
- v: Schlupfgrößenwert (Anhängerachse)
- vHA: Schlupfgrößenwert (Hinterachse)
- vRA: Schlupfgrößenwert (Regelachse)
- vVA: Schlupfgrößenwert (Vorderachse)
- z-Ist: Fahrzeugverzögerungs-Istwert
- z-Max: Maximalverzögerung
- z-Soll: Wunschverzögerung

## Patentansprüche

1. Verfahren zur Verzögerung eines Fahrzeuggespanns (7) mit einem Zugfahrzeug (5) und mindestens einem Anhängefahrzeug (6) mit Antiblockiersystem (36), wobei eine Zugfahrzeugbremsanlage (3) einen Bremsdruck (P) an den pneumatisch betätigbaren Radbremsen (13) des Zugfahrzeugs (5) entsprechend einer vom Fahrer vorgegebenen Wunschverzögerung (z-Soll) einstellt und einen Anhängerbremsdruck (P-A) für die Anhängerbremsanlage (4) wenigstens eines Anhängefahrzeugs (6) bereitstellt,
wobei eine elektronische Bremssteuereinheit (30) der Zugfahrzeugbremsanlage (3)
- einen aktuellen Fahrzeugverzögerungs-Istwert (z-Ist) erfasst (42),
- den Fahrzeugverzögerungs-Istwert (z-Ist) laufend mit einer Maximalverzögerung (z-Max) vergleicht (43) und im Fall, dass der Fahrzeugverzögerungs-Istwert (z-Ist) die Maximalverzögerung (z-Max) erreicht oder überschreitet, den Bremsdruck (P) an den Radbremsen (13) des Zugfahrzeugs (5) limitiert (44) und ein Informationssignal (45) für die jeweilige Bremselektronik (31) jedes Anhängefahrzeugs (6) bereitstellt, welches wenigstens eine Limitierungsstatusinformation (46) repräsentiert,
und wobei die jeweilige Bremselektronik (31) einer Anhängerbremsanlage (4)
- Messsignale (35) von Drehzahlsensoren (34) der Räder (10) des Anhängefahrzeugs (6) erfasst und in Abhängigkeit der Messsignale (35) den Bremsdruck P-A an den Radbremsen (13) des Anhängefahrzeugs (6) durch Ansteuerung von Drucksteuerventilen (27) einstellt,
- das Informationssignal (45) empfängt (52) und bei Erkennung einer Limitierung (44) des Bremsdrucks P im Zugfahrzeug anhand der Messsignale (35) von Drehzahlsensoren (34) der Räder (10) des Anhängefahrzeugs (6) für jede Anhängerachse (11, 12) eine den Schlupf repräsentierenden dynamischen Schlupfgrößenwert (v, vRA) bestimmt,
- Schlupfgrößenwerte (v, vRA) aller Anhängerachsen (11, 12) miteinander vergleicht (49) und wenigstens an denjenigen Anhängerachsen (12) mit den höheren Schlüpfen gegenüber einer Regelachse (11) mit dem aktuell geringsten Schlupf die Einlassventile (32) der jeweiligen Drucksteuerventile (27) schließt.

2. Verfahren nach Anspruch 1,
**dadurch gekennzeichnet, dass**
die Maximalverzögerung (z-Max) in Abhängigkeit der vom Fahrer vorgegebenen Wunschverzögerung (z-Soll) ermittelt wird.

3. Verfahren nach Anspruch 1 oder 2,
**dadurch gekennzeichnet, dass**
der dynamische Schlupfgrößenwert (vRA) der Regelachse (11) des Anhängefahrzeugs (6) verglichen wird mit Schlupfgrößenwerten (vVA, vHA) der Achsen (8, 9) des Zugfahrzeugs (5) und in dem Fall, dass für die Regelachse (11) im Fahrzeugvergleich (50) der größte Schlupf ermittelt wird, auch an der Regelachse (11) die Einlassventile (32) der Drucksteuerventile (27) geschlossen werden.

4. Verfahren nach Anspruch 3,
**dadurch gekennzeichnet, dass**
der Schlupfgrößenwert (vRA) der Regelachse (11) des Anhängefahrzeugs (6) der Bremssteuereinheit (30) der Zugfahrzeugbremsanlage (3) mitgeteilt wird und die Bremssteuereinheit (30) das Informationssignal (45) mit einer dem Fahrzeugvergleich (50) entsprechenden Überbremsinformation (51) bereitstellt.

5. Verfahren nach Anspruch 3 oder 4,
**dadurch gekennzeichnet, dass**
als Schlupfgrößenwert (v, vRA, vVA, vHA) eine Geschwindigkeit der betreffenden Achse (8, 9, 11, 12) ermittelt und ausgewertet wird.

6. Kombination von pneumatischen Bremsanlagen (3, 4) der Fahrzeuge (5, 6) eines Fahrzeuggespanns (7) zur Durchführung des Verfahrens nach einem der Ansprüche 1 bis 5, mit einer Zugfahrzeugbremsanlage (3) eines Zugfahrzeugs (5) und jeweils einer Anhängerbremsanlage (4) wenigstens eines Anhängefahrzeugs (6) mit Antiblockiersystem (36),
wobei die Zugfahrzeugbremsanlage (3) pneumatisch betätigbare Radbremsen (13) und eine mit Drucksteuerventilen (27) der Radbremsen (13) des Zugfahrzeugs (5) verbundene Bremssteuereinheit (30) aufweist, welche dazu ausgebildet ist,
- einen aktuellen Fahrzeugverzögerungs-Istwert (z-Ist) zu erfassen und laufend mit einer Maximalverzögerung (z-Max) zu vergleichen, und
- im Fall, dass der Fahrzeugverzögerungs-Istwert (z-Ist) die Maximalverzögerung (z-Max) erreicht oder überschreitet, den Bremsdruck (P) an den Radbremsen (13) des Zugfahrzeugs (5) zu limitieren (44) und ein Informationssignal (45) für die jeweilige Bremselektronik (31) jedes Anhängefahrzeugs (6) bereitzustellen (47), welches wenigstens eine Limitierungsstatusinformation (46) repräsentiert
- und wobei die Anhängerbremsanlage (4) eine Bremselektronik (31) und dem jeweiligen Rädern (10) des Anhängefahrzeugs (6) zugeordnete Drehzahlsensoren (34) sowie an jedem Rad (10) des Anhängefahrzeugs (6) eine Radbremse (13) aufweist, welche über Drucksteuerventile (27) von der Bremselektronik (31) pneumatisch betätigbar sind, wobei die Bremselektronik (31) über eine Kommunikationsverbindung (48) mit der Bremssteuereinheit (30) des Zugfahrzeugs (5) signalübertragend verbindbar ist und dazu ausgebildet ist,
- in Abhängigkeit der Messsignale (35) der Drehzahlsensoren (34) den Bremsdruck P-A an den Radbremsen (13) des Anhängefahrzeugs (6) durch Ansteuerung der Drucksteuerventile (27) einzustellen,
- das Informationssignal (45) zu empfangen und bei Erkennung einer Limitierung (44) des Bremsdrucks P im Zugfahrzeug (5) anhand der Messsignale (35) der Drehzahlsensoren (34) der Anhängerbremsanlage (4) für jede Anhängerachse (11, 12) eine den Schlupf repräsentierenden dynamischen Schlupfgrößenwert (v, vRA) zu bestimmen,
- Schlupfgrößenwerte (v, vRA) aller Anhängerachsen (11, 12) miteinander zu vergleichen (49) und wenigstens an denjenigen Anhängerachsen (11, 12) mit den höheren Schlüpfen gegenüber einer Regelachse (11) mit dem aktuell geringsten Schlupf die Einlassventile (32) der jeweiligen Drucksteuerventile (27) zu schließen.

7. Kombination von pneumatischen Bremsanlagen nach Anspruch 6,
**dadurch gekennzeichnet, dass**
der Bremssteuereinheit (30) des Zugfahrzeugs (5) ein Kennfeldspeicher (37) zugeordnet ist, in welchem vorzugebende Maximalverzögerungen (z-Max) in Abhängigkeit der Wunschverzögerung (z-Soll) abgespeichert sind und die Bremssteuereinheit (30) dazu ausgebildet ist, eine Maximalverzögerung (z-Max) in Abhängigkeit einer vom Fahrer aktuell vorgegebenen Wunschverzögerung (z-Soll) zu bestimmen.

8. Kombination von pneumatischen Bremsanlagen nach Anspruch 6 oder 7,
**dadurch gekennzeichnet, dass**
die Bremssteuereinheit (30) zum Empfang von Schlupfgrößenwerten (v, vRA) der Anhängerachsen (11, 12) über die Kommunikationsverbindung (48) ausgebildet ist.

## Claims

1. Method for decelerating a vehicle combination (7) with a tractor vehicle (5) and at least one trailer vehicle (6) with an anti-lock brake system (36), wherein a tractor vehicle brake system (3) sets a brake pressure (P) at the pneumatically activated wheel brakes (13) of the tractor vehicle (5) in accordance with a desired deceleration (z-Soll) predefined by the driver and makes available a trailer brake pressure (P-A) for the trailer brake system (4) of at least one trailer vehicle (6),
wherein an electronic brake control unit (30) of the tractor vehicle brake system (3)
- detects (42) a current vehicle deceleration actual value (z-Ist),
- compares (43) the vehicle deceleration actual value (z-Ist) continuously with a maximum deceleration (z-Max), and in the event of the vehicle deceleration actual value (z-Ist) reaching or exceeding the maximum deceleration (z-Max) said electronic brake unit (30) limits (44) the brake pressure (P) at the wheel brakes (13) of the tractor vehicle (5) and makes available an information signal (45) for the respective brake electronics (31) of each trailer vehicle (6), which information signal (45) represents at least one limiting status information item (46),
and wherein the respective brake electronics (31) of a trailer brake system (4)
- detects measurement signals (35) of rotational speed sensors (34) of the wheels (10) of the trailer vehicle (6) and sets the brake pressure (P-A) at the wheel brakes (13) of the trailer vehicle (6) as a function of the measurement signals (35) by actuating pressure control valves (27),
- receives (52) the information signal (45), and when limitation (44) of the brake pressure (P) in the tractor vehicle is detected, a dynamics variable value (v, vRA) which represents the slip is determined for each trailer axle (11, 12) on the basis of the measurement signals (35) of rotational speed sensors (34) of the wheels (10) of the trailer vehicle (6),
- compares (49) slip variable values (v, vRA) of all the trailer axles (11, 12) with one another, and closes the inlet valves (32) of the respective pressure control valves (27) at least on those trailer axles (12) with the higher slip values with respect to a control axle (11) with the currently lowest slip.

2. Method according to Claim 1,
**characterized in that**
the maximum deceleration (z-Max) is determined as a function of the desired deceleration (z-Soll) which is predefined by the driver.

3. Method according to Claim 1 or 2,
**characterized in that**
the dynamic slip variable value (vRA) of the control axle (11) of the trailer vehicle (6) is compared with slip variable values (vVA, vHA) of the axles (8, 9) of the trailer vehicle (5), and in the event of the highest slip being determined for the control axle (11) in the vehicle comparison (50), the inlet valves (32) of the pressure control valves (27) are also closed on the control axle (11).

4. Method according to Claim 3,
**characterized in that**
the slip variable value (vRA) of the control axle (11) of the trailer vehicle (6) is communicated to the brake control unit (30) of the trailer vehicle brake system (3), and the brake control unit (30) makes available the information signal (45) with an over braking information item (51) which corresponds to the vehicle comparison (50).

5. Method according to Claim 3 or 4,
**characterized in that**
a speed of the respective axle (8, 9, 11, 12) is determined as a slip variable value (v, vRA, vVA, vHA) and evaluated.

6. Combination of pneumatic brake systems (3, 4) of the vehicles (5, 6) of a vehicle combination (7) for carrying out the method according to one of Claims 1 to 5, having a tractor vehicle brake system (3) of a tractor vehicle (5) and in each case a trailer brake system (4) of at least one trailer vehicle (6) with an anti-lock brake system (36),
wherein the tractor vehicle brake system (3) has pneumatically activated wheel brakes (13) and a brake control unit (30) which is connected to brake control valves (27) of the wheel brakes (13) of the tractor vehicle (5) and which is designed
- to detect a current vehicle deceleration actual value (z-Ist) and to compare it continuously with a maximum deceleration (z-Max), and
- in the event of the vehicle deceleration actual value (z-Ist) reaching or exceeding the maximum deceleration (z-Max), to limit (44) the brake pressure (P) at the wheel brakes (13) of the tractor vehicle (5) and to make available (47) an information signal (45) for the respective brake electronics (31) of each trailer vehicle (6), which information signal (45) represents at least a limiting status information item (46),
- and wherein the trailer brake system (4) has brake electronics (31) and rotational speed sensors (34) which are assigned to the respective wheels (10) of the trailer vehicle (6), and on each wheel (10) of the trailer vehicle (6) a wheel brake (13) which can be activated pneumatically by the brake electronics (31) by means of brake control valves (27), wherein the brake electronics (31) can be connected in a signal-transmitting fashion to the brake control unit (30) of the tractor (5) via a communication link (48), and is designed
- to set the brake pressure (P-A) at the wheel brakes (13) of the trailer vehicle (6) as a function of the measurement signals (35) of the rotational speed sensors (34) by actuating the pressure control valves (27),
- to receive the information signal (45), and when limitation (44) of the brake pressure (P) is detected in the tractor vehicle (5), to determine the dynamic slip variable value (v, vRA) which represents the slip for each trailer axle (11, 12), on the basis of the measurement signals (35) of the rotational speed sensors (34) of the trailer brake system (4),
- to compare (49) slip variable values (v, vRA) of all the trailer vehicles (11, 12) with one another and to close the inlet valves (32) of the respective pressure control valves (27) at least on those trailer axles (11, 12) with the highest slip values in comparison with a control axle (11) with the currently lowest slip.

7. Combination of pneumatic brake systems according to Claim 6,
**characterized in that**
the brake control unit (30) of the tractor vehicle (5) is assigned a characteristic diagram memory (37) in which maximum decelerations (z-Max) which are to be predefined are stored as a function of the desired deceleration (z-Soll), and the brake control unit (30) is designed to determine a maximum deceleration (z-Max) as a function of a desired deceleration (z-Soll) which is currently predefined by the driver.

8. Combination of pneumatic brake systems according to Claim 6 or 7,
**characterized in that**
the brake control unit (30) is designed to receive slip variable values (v, vRA) of the trailer axles (11, 12) via the communication link (48).

## Revendications

1. Procédé de ralentissement d'un train routier (7) comprenant un véhicule tracteur (5) et au moins un véhicule tracté (6) doté d'un système antiblocage (36), dans lequel un système de freinage de véhicule tracteur (3) établit une pression de freinage (P) au niveau des freins de roue à commande pneumatique (13) du véhicule tracteur (5) en fonction d'un ralentissement souhaité (z-Soll) prédéterminé par le conducteur et fournit une pression de freinage de remorque (P-A) pour le système de freinage de remorque (4) d'au moins un véhicule tracté (6),
dans lequel une unité de commande de freinage électronique (30) du système de freinage de véhicule tracteur (3)
- détecte une valeur réelle actuelle de ralentissement de véhicule (z-Ist) (42),
- compare en continu (43) la valeur réelle de ralentissement de véhicule (z-Ist) à un ralentissement maximal (z-Max) et, dans le cas où la valeur réelle de ralentissement de véhicule (z-Ist) atteint ou dépasse le ralentissement maximal (z-Max), limite (44) la pression de freinage (P) au niveau des freins de roue (13) du véhicule tracteur (5) et fournit un signal d'information (45) pour l'électronique de freinage (31) respective de chaque véhicule tracté (6), lequel signal d'information représente au moins une information d'état de limitation (46),
et dans lequel l'électronique de freinage (31) respective d'un système de freinage de remorque (4)
- détecte des signaux de mesure (35) en provenance de capteurs de vitesse de rotation (34) des roues (10) du véhicule tracté (6) et règle, en fonction des signaux de mesure (35), la pression de freinage (P-A) au niveau des freins de roue (13) du véhicule tracté (6) en commandant des soupapes de commande de pression (27),
- reçoit (52) le signal d'information (45) et détermine, en cas de détection d'une limitation (44) de la pression de freinage (P) dans le véhicule tracteur, une valeur de grandeur de patinage (v, vRA) dynamique représentant le patinage sur la base des signaux de mesure (35) des capteurs de vitesse de rotation (34) des roues (10) du véhicule tracté (6) pour chaque essieu de remorque (11, 12),
- compare (49) les unes aux autres des valeurs de grandeur de patinage (v, vRA) de tous les essieux de remorque (11, 12) et ferme les soupapes d'admission (32) des soupapes de commande de pression (27) respectives, au moins au niveau des essieux de remorque (12) présentant des patinages plus élevés vis-à-vis d'un essieu de régulation (11) présentant le patinage actuellement le plus faible.

2. Procédé selon la revendication 1,
**caractérisé en ce que** le ralentissement maximal (z-Max) est déterminé en fonction du ralentissement souhaité (z-Soll) prédéterminé par le conducteur.

3. Procédé selon la revendication 1 ou 2,
**caractérisé en ce que** la valeur de grandeur de patinage (vRA) dynamique de l'axe de régulation (11) du véhicule tracté (6) est comparée à des valeurs de grandeur de patinage (vVA, vHA) des essieux (8, 9) du véhicule tracteur (5) et dans le cas où le patinage le plus élevé est déterminé pour l'axe de régulation (11) lors de la comparaison de véhicules (50), les soupapes d'admission (32) des soupapes de commande de pression (27) sont également fermées au niveau de l'axe de régulation (11).

4. Procédé selon la revendication 3,
**caractérisé en ce que** la valeur de grandeur de patinage (vRA) de l'axe de régulation (11) du véhicule tracté (6) est communiquée à l'unité de commande de freinage (30) du système de freinage de véhicule tracteur (3) et l'unité de commande de freinage (30) fournit le signal d'information (45) avec une information de surfreinage (51) correspondant à la comparaison de véhicules (50).

5. Procédé selon la revendication 3 ou 4,
**caractérisé en ce qu'**une vitesse de l'essieu (8, 9, 11, 12) concerné est déterminée et évaluée en tant que valeur de grandeur de patinage (v, vRA, vVA, vHA).

6. Combinaison de systèmes de freinage pneumatiques (3, 4) des véhicules (5, 6) d'un train routier (7) pour la mise en œuvre du procédé selon l'une des revendications 1 à 5, comprenant un système de freinage de véhicule tracteur (3) d'un véhicule tracteur (5) et un système de freinage de remorque (4) respectif d'au moins un véhicule tracté (6) doté d'un système de freinage antiblocage (36),
dans lequel le système de freinage de véhicule tracteur (3) comporte des freins de roue à commande pneumatique (13) et une unité de commande de freinage (30) reliée à des soupapes de commande de pression (27) des freins de roue (13) du véhicule tracteur (5), laquelle est conçue pour
- détecter une valeur réelle actuelle de ralentissement de véhicule (z-Ist) et la comparer en continu à un ralentissement maximal (z-Max), et
- dans le cas où la valeur réelle de ralentissement de véhicule (z-Ist) atteint ou dépasse le ralentissement maximal (z-max), limiter (44) la pression de freinage (P) au niveau des freins de roue (13) du véhicule tracteur (5) et fournir (47) un signal d'information (45) pour l'électronique de freinage (31) respective de chaque véhicule tracté (6), lequel signal d'information représente au moins une information d'état de limitation (46),
- et dans lequel le système de freinage de remorque (4) comporte une électronique de freinage (31) et des capteurs de vitesse de rotation (34) associés aux roues (10) respectives du véhicule tracté (6) ainsi qu'un frein de roue (13) au niveau de chaque roue (10) du véhicule tracté (6), lesquels freins de roue peuvent être actionné de manière pneumatique par l'électronique de freinage (31) par le biais de soupapes de commande de pression (27), dans lequel l'électronique de freinage (31) peut être reliée par transmission de signaux par le biais d'une liaison de communication (48) à l'unité de commande de freinage (30) du véhicule tracteur (5) et est conçue pour
- régler, en fonction des signaux de mesure (35) des capteurs de vitesse de rotation (34), la pression de freinage (P-A) au niveau des freins de roue (13) du véhicule tracté (6) en commandant les soupapes de commande de pression (27),
- recevoir le signal d'information (45) et déterminer, en cas de détection d'une limitation (44) de la pression de freinage (P) dans le véhicule tracteur (5), une valeur de grandeur de patinage (v, vRA) dynamique représentant le patinage sur la base des signaux de mesure (35) des capteurs de vitesse de rotation (34) du système de freinage de remorque (4) pour chaque essieu de remorque (11, 12),
- comparer (49) les unes aux autres des valeurs de grandeur de patinage (v, vRA) de tous les essieux de remorque (11, 12) et fermer les soupapes d'admission (32) des soupapes de commande de pression (27) respectives, au moins au niveau des essieux de remorque (11, 12) présentant les patinages les plus élevés vis-à-vis d'un axe de régulation (11) présentant actuellement le patinage le plus faible.

7. Combinaison de systèmes de freinage pneumatiques selon la revendication 6,
**caractérisée en ce qu'**une mémoire de diagramme caractéristique (37) est associée à l'unité de commande de freinage (30) du véhicule tracteur (5), dans laquelle sont stockés des ralentissements maximaux (z-Max) devant être prédéfinis en fonction du ralentissement souhaité (z-Soll), et l'unité de commande de freinage (30) est conçue pour déterminer un ralentissement maximal (z-Max) en fonction d'un ralentissement souhaité (z-Soll) actuellement prédéterminé par le conducteur.

8. Combinaison de systèmes de freinage pneumatiques selon la revendication 6 ou 7,
**caractérisée en ce que** l'unité de commande de freinage (30) est conçue pour recevoir des valeurs de grandeur de patinage (v, vRA) des essieux de remorque (11, 12) par le biais de la liaison de communication (48).
